# EUROPÄISCHE PATENTANMELDUNG

(11) **EP 2 161 116 A1**
(43) Veröffentlichungstag der Anmeldung: **10.03.2010**
(21) Anmeldenummer: 09009014.3
(22) Anmeldetag: 10.04.2003
(51) Int. Cl.: B29C 45/00, B29C 49/06, B29C 49/64

(54) **Verfahren und Vorrichtung zur Bearbeitung von Vorformlingen**

(30) Priorität: 10.04.2002 DE 10215722
(62) Teilanmeldung aus: 07014410.0
(71) Anmelder: Husky Injection Molding Systems S.A., 3401 Dudelange (LU)
(72) Erfinder: Pesavento, Modesto M., 98574 Schmalkalden (DE)
(74) Vertreter: Cramphorn, Conrad

(57) **Zusammenfassung**

Eine Vorrichtung wird beschrieben zur Bearbeitung eines Vorformlings (1) aus einem thermoplastischen Kunststoff, der zur Blasverformung in einen Behälter vorgesehen und in einem Spritzgusswerkzeug spritzgusstechnisch hergestellt ist. Dabei umfasst die Vorrichtung einen Innendorn (22) mit einem Druckmittelkanal (23), der an eine Verteilkammer (28) angeschlossen ist. Die Verteilkammer (28) ist von einer Membran (29) verschlossen, so dass bei einer Druckbeaufschlagung des Druckmittelkanals (23) die Membran (29) gegen die Seitenwand (4) des Vorformlings (1) gepresst wird und eine Verformung des Vorformlings (1) bewirkt. Ferner wird ein entsprechendes Verfahren beschrieben.

## Beschreibung

Die Erfindung betrifft ein Verfahren zur Bearbeitung von Vorformlingen aus einem thermoplastischen Kunststoff, die zur Blasverformung in Behälter vorgesehen sind und bei dem die Vorformlinge in einem Spritzgußwerkzeug spritzgußtechnisch hergestellt sind und nach einer Entnahme aus dem Spritzgußwerkzeug verformt werden.

Die Erfindung betrifft darüber hinaus eine Vorrichtung zur Bearbeitung von Vorformlingen aus einem thermoplastischen Kunststoff; die zur Blasverformung in Behälter vorgesehen und in einem Spritzgußwerkzeug spritzgußtechnisch hergestellt sind, bei der die Vorformlinge mindestens von einer Kühleinrichtung beaufschlagt sind.

Ein Verfahren zur Bearbeitung von Vorformlingen aus einem thermoplastischen Kunststoff wird beispielsweise in der PCT-WO 97/39874 beschrieben. Die Vorformlinge werden hier nach einer Entnahme aus dem Spritzgußwerkzeug in Kühlhülsen überführt und durch Beaufschlagung mit einem Innendruck gegen die Wände der Kühlhülse gedrückt. Hierdurch wird während des gesamten Kühlvorganges ein Kontakt der Vorformlinge mit der Wandung der Kühlhülse aufrechterhalten, da durch den einwirkenden Innendruck ein Schrumpfen der Vorformlinge aufgrund der Abkühlung kompensiert werden kann.

Eine blastechnische Verformung von Vorformlingen in Behälter innerhalb einer Blasform wird in der DE 41 28 438 A1 erläutert. Die Blasform ist hier mit porösen Pfropfen versehen, die an eine Druckquelle angeschlossen sind. Durch die Druckluftbeaufschlagung der porösen Pfropfen wird ein Druckluftkissen bereitgestellt, das Oberflächenbeschädigungen der geblasenen Behälter durch ein Gleiten des Materials auf der inneren Oberfläche der Blasform verhindert.

Aufgabe der vorliegenden Erfindung ist es, ein Verfahren der einleitend genannten Art derart zu verbessern, daß eine Herstellung von Vorformlingen mit geringerem Zeitbedarf und bei einfachem konstruktiven Aufbau unterstützt wird.

Diese Aufgabe wird erfindungsgemäß dadurch gelöst, daß die Vorformlinge durch Unterdruckeinwirkung verformt werden.

Weitere Aufgabe der vorliegenden Erfindung ist es, eine Vorrichtung der einleitend genannten Art derart zu konstruieren, daß eine Bearbeitung der Vorformlinge bei einfachem gerätetechnischen Aufbau sowie mit einem geringen Herstellungspreis der Vorrichtung unterstützt wird.

Diese Aufgabe wird erfindungsgemäß dadurch gelöst, daß die Kühleinrichtung mindestens bereichsweise aus einem porösen Material ausgebildet ist.

Die Verformung der Vorformlinge durch Unterdruckeinwirkung im Anschluß an die spritzgußtechnische Herstellung der Vorformlinge führt zu einer Reihe von Vorteilen. Ein Vorteil besteht darin, daß der Vorformling durch eine äußere Unterdruckeinwirkung gegen Wandungen einer Kühlhülse gezogen werden kann und daß hierdurch während des gesamten Kühlvorganges ein unmittelbarer Kontakt zwischen dem Vorformling und der Wandung der Kühlhülse aufrechterhalten bleibt.

Ein weiterer Vorteil ist darin zu sehen, daß durch die Unterdruckeinwirkung eine Verformung des Vorformlings in Längsrichtung, in einer radialen Richtung und / oder in einer Umfangsrichtung bezüglich einer Vorformlingslängsachse erfolgen kann, so daß der Vorformling mit einer von der Kontur der Kavitäten des Spritzgußwerkzeuges abweichenden Gestaltung versehen werden kann. Insbesondere ist hierbei daran gedacht, durch die Unterdruckeinwirkung eine Materialverteilung in der Wandung des Vorformlings zu erzeugen, die für eine nachfolgende blastechnische Herstellung von ovalen Flaschen günstig ist. In Umfangsrichtung des Vorformlings können hierdurch unterschiedliche Wanddicken bereitgestellt werden.

Ein weiterer Vorteil besteht darin, daß durch die Unterdruckeinwirkung ungewollt verformte oder vom Spritzgußwerkzeug nicht im vollen Umfang ausgeformte Vorformlinge nachgeformt werden können. Hierdurch ist es zum einen möglich, krumme Vorformlinge auszurichten oder Vorformlingsdeformationen zu kompensieren. Insbesondere ist auch daran gedacht, bei einem Einsatz des erfindungsgemäßen Verfahrens und / oder der erfindungsgemäßen Vorrichtung bewußt im Bereich des Spritzgußwerkzeuges die Zykluszeiten zu verkürzen oder vergrößerte Toleranzen bei den Werkzeuggeometrien des Spritzgußwerkzeuges vorzugeben. Bei einer derartigen bewußt zu frühen Entformung der Vorformlinge wird ein Verziehen der zu heiß entformten Vorformlinge oder eine Ausbildung von Einfallstellen in Kauf genommen, da diese Fehler der Vorformlinge durch die Nachverformung und aufgrund der Unterdruckeinwirkung kompensiert werden können. Die sehr teuren Spritzgußwerkzeuge können hierdurch mit einer vergrößerten Produktivität genutzt werden.

Ein typischer Verformungsvorgang erfolgt derart, daß der Unterdruck außenseitig auf die Vorformlinge einwirkt.

Ebenfalls ist es möglich, daß der Unterdruck innenseitig auf die Vorformlinge einwirkt.

Eine bevorzugte Anwendung besteht darin, daß die Vorformlinge innerhalb einer Kühleinrichtung vom Unterdruck beaufschlagt werden.

Eine preiswerte Unterdruckzuführung kann dadurch erfolgen, daß die Vorformlinge durch ein poröses Material hindurch vom Unterdruck beaufschlagt werden.

Zur Unterstützung einer gleichmäßigen Verteilung des Unterdruckes wird vorgeschlagen, daß der Unterdruck dem porösen Material durch Unterdruckkanäle hindurch zugeführt wird.

Eine Handhabung der Vorformlinge kann dadurch unterstützt werden, daß die Vorformlinge lokal mit einem Druckmittel beaufschlagt werden.

Eine zusätzliche Beeinflussung des Prozeßablaufes kann dadurch erfolgen, daß die Vorformlinge temporär mit einem Druckmittel beaufschlagt werden.

Verbesserte Steuerungsmöglichkeiten werden dadurch bereitgestellt, daß eine Unterdruckbeaufschlagung der Vorformlinge durch lokale poröse Einsätze hindurch erfolgt.

Eine Vorgabe lokal unterschiedlicher Druckbedingungen entlang einer Innenbegrenzung der den Vorformling aufnehmenden Kavität kann dadurch erreicht werden, daß lokale poröse Einsätze über Steuerventile teilweise vorgebbar an eine Druckquelle sowie an eine Unterdruckquelle angeschlossen werden.

Eine Verformung des Vorformlings von innen her kann dadurch erfolgen, daß eine Verformung der Vorformlinge unter Verwendung eines porösen Innendornes durchgeführt wird.

Eine lokal begrenzte Materialverformung wird dadurch unterstützt, daß-vom Innendorn eine lokale Unterdruckeinwirkung auf den Vorformling bereitgestellt wird.

Eine typische Anwendung besteht darin, daß die Verformung des Vorformlings als Zwischenschritt bei der Durchführung eines einstufigen Spritz-Blas-Verfahrens durchgeführt wird.

Ebenfalls ist daran gedacht, daß die Verformung des Vorformlings als Zwischenschritt bei der Durchführung eines zweistufigen Spritz-Blas-Verfahrens durchgeführt wird.

Eine vorteilhafte gerätetechnische Realisierung kann dadurch erfolgen, daß das poröse Material im Bereich einer Kühlhülse angeordnet ist.

Zur Bereitstellung einer ausreichenden mechanischen Stabilität wird vorgeschlagen, daß das poröse Material als ein Einsatz ausgebildet ist, der von einem Rahmen gehaltert ist.

Eine Unterdruckbereitstellung innerhalb des porösen Materials mit geringen Strömungswiderständen wird dadurch erreicht, daß im Bereich des Einsatzes mindestens ein Unterdruckkanal angeordnet ist.

Gemäß einer weiteren Konstruktionsvariante ist daran gedacht, daß im Bereich des Rahmens mindestens ein Kühlkanal angeordnet ist.

Eine Druckabschirmung gegenüber einer Umgebung kann dadurch erreicht werden, daß der Einsatz mindestens bereichsweise von einer Dichtung bedeckt ist.

Zur Ermöglichung einer druckunterstützten Beweglichkeit des Vorformlings relativ zum Einsatz aus dem porösen Material wird vorgeschlagen, daß sich der Unterdruckkanal bis in den Bereich einer Kavität des Einsatzes erstreckt.

Eine gezielte örtliche Vorgabe der Wirksamkeit der realisierten Druckverhältnisse kann dadurch erreicht werden, daß der Innendorn mindestens bereichsweise von einer Dichtung bedeckt ist.

Bei einer vorgesehenen lediglich teilweisen Nachverformung des Vorformlings ist auch daran gedacht, daß der Innendorn im Bereich einer Kuppe von einer Dichtung bedeckt ist.

Eine weitere Variante zur Nachverformung der Vorformlinge besteht darin, daß der Innendorn mit mindestens einer Membran versehen ist, die eine Verteilkammer begrenzt.

Eine typische Werkstoffauswahl besteht darin, daß das poröse Material als ein poröses Metall ausgebildet ist.

Eine besonders gute Wärmeleitfähigkeit kann dadurch erreicht werden, daß das poröse Metall aus Aluminium ausgebildet ist.

Eine andere Ausführungsvariante besteht darin, daß das poröse Material als ein Sintermetall ausgebildet ist.
Diese Materialien können mit variablen Porengrößen, schon ab wenigen µm aufwärts, eingesetzt werden. Je geringer die Porengröße gewählt wird, um so besser ist die Oberflächengüte des Vorformlings. Eine zu geringe Porengröße führt zu einem zu hohen Druck-/Vakuumbedarf. Ferner neigen zu kleine Poren zum Verstopfen durch Staub. Folgende porösen (luftdurchlässige) Werkstoffe sind beispielsweise handelsüblich verfügbar:
"METAPOR®" PORTEC AG;
"ultraporex®" ultarfilter international AG;
"PorceraxII®" International Mold Steel, INC.;
"KuporeX^{™}" KUBOTA Corporation;

In den Zeichnungen sind Ausführungsbeispiele der Erfindung schematisch dargestellt. Es zeigen:
- Fig. 1: Einen Querschnitt durch eine Kühleinrichtung, bei der von einem porösen Element eine Kühlhülse ausgebildet ist,
- Fig. 2: eine gegenüber Fig. 1 modifizierte Ausführungsform, bei der durch das poröse Element sowohl Unterdruck als auch Überdruck in Richtung auf den Vorformling leitbar ist,
- Fig. 3: einen Querschnitt durch eine Ausführungsform, bei der eine Mehrzahl von räumlich voneinander getrennten porösen Einsätzen verwendet sind, die steuerbar an Überdruck und / oder Unterdruck anschließbar sind,
- Fig. 4.: eine teilweise Darstellung eines Vertikalschnittes durch eine Einrichtung, bei der ein Innendorn für die Vorformlinge aus einem porösen Material für eine in Richtung der Längsachse der Vorformlinge teilweise Nachverformung verwendet wird,
- Fig. 5: eine gegenüber Fig. 4 abgewandelte Ausführungsform, bei der der Innendorn für eine vollständige Nachverformung des Vorformlings ausgebildet ist,
- Fig. 6: eine gegenüber Fig. 5 abgewandelte Ausführungsform, bei der Verformungskräfte auf den Vorformling durch am Innendorn angebrachte Membrane aufgebracht werden,
- Fig. 7: einen Querschnitt durch einen in einem Einsatz aus porösem Material angeordneten Vorformling,
- Fig. 8: eine Querschnittdarstellung entsprechend Fig. 7 nach einer Verformung des Vorformlings durch Unterdruckeinwirkung und
- Fig. 9: eine schematische Querschnittdarstellung eines verformten Vorformlings gemäß Fig. 8 sowie einer korrespondierenden ovalen Behälterkontur nach einer Blasverformung des Vorformlings.

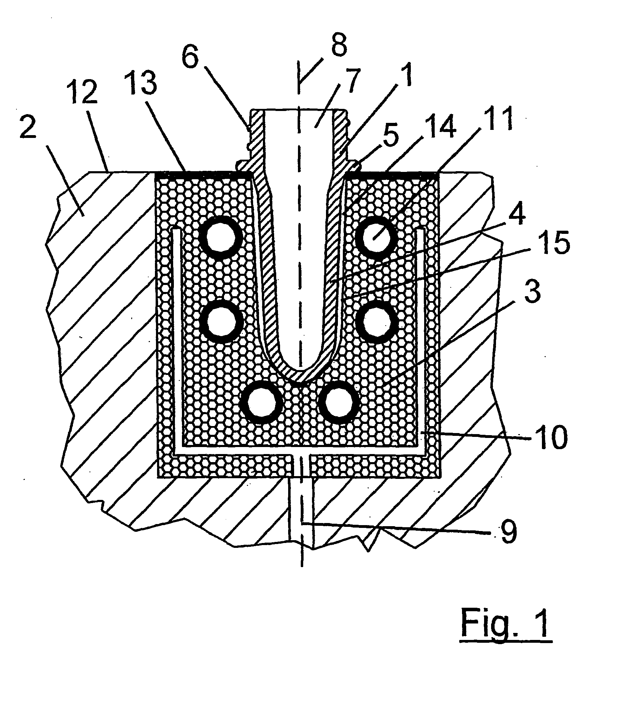

Fig. 1 zeigt einen Querschnitt durch eine Vorrichtung zur Bearbeitung von Vorformlingen (1), die einen Rahmen (2) sowie einen Einsatz (3) aus einem porösen Material aufweist. Der Begriff des porösen Materials umfaßt hierbei sowohl offenporige schaumartige Strukturen als auch Sintermaterialien oder vergleichbare Materialstrukturen. Aufgrund der hohen Wärmeleitfähigkeit haben sich insbesondere offenporige Metallschäume, beispielsweise aus Aluminium, bewährt.

Der Vorformling (1) besteht aus einem thermoplastischen Material, beispielsweise aus PET (Polyethylenterephthalat) und ist mit einer Seitenwand (4), einem Stützring (5) sowie einem Mündungsabschnitt (6) versehen. Ein Innenraum (7) des Vorformlings (1) erstreckt sich entlang einer Vorformlingslängsachse (8).

Durch den Rahmen (2) hindurch erstreckt sich ein Unterdruckkanal (9), der mit einem Unterdruckkanal (10) innerhalb des Einsatzes (3) verbunden ist. Im Bereich des Einsatzes (3) sind darüber hinaus Kühlkanäle (11) angeordnet, durch die ein Kühlmedium zirkulieren kann. Im Bereich einer Oberfläche (12) des Rahmens (2) ist eine Oberfläche des Einsatzes (3) von einer Dichtung (13) verschlossen, um bei einer Unterdruckbeaufschlagung ein Ansaugen von Umgebungsluft zu verhindern.

Der Vorformling (1) ist in eine Kavität (14) des Einsatzes (3) derart eingeführt, daß der Stützring (5) im Bereich der Oberfläche des Einsatzes (3) aufliegt. Bei einer Unterdruckbeaufschlagung des Einsatzes (3) wird zwischen dem Vorformling (1) und der Kavität (14) befindliche Luft abgesaugt und der im Bereich des Innenraumes (7) des Vorformlings (1) anstehende Umgebungsdruck drückt die Seitenwand (4) des Vorformlings (1) gegen eine Begrenzungsfläche (15) der Kavität (14). Der hierdurch hervorgerufene Materialkontakt führt zu einer verbesserten Kühlung des Vorformlings (1) und trägt dazu bei, daß der Vorformling (1) die Form der Begrenzungsfläche (15) annimmt.

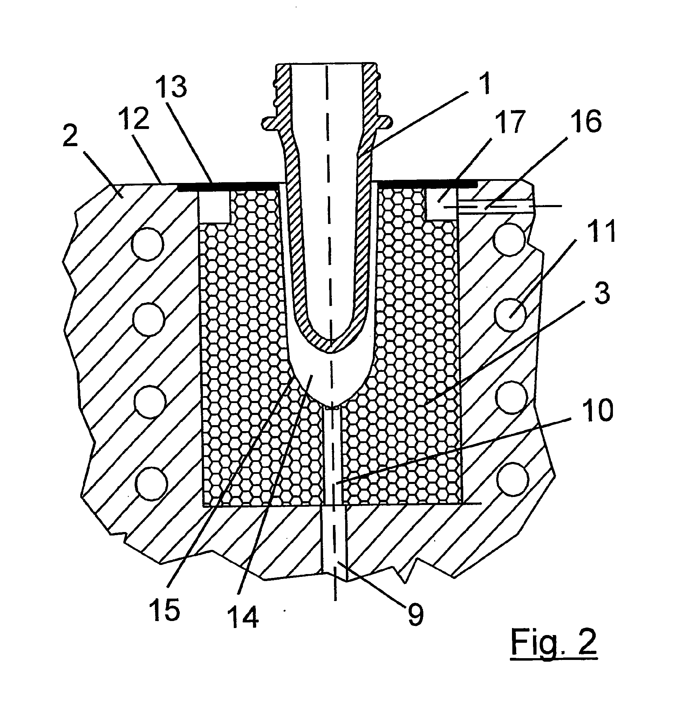

Bei der Ausführungsform gemäß der Fig. 2 streckt sich der Unterdruckkanal (10) bis zur Kavität (14) des Einsatzes (3). Darüber hinaus sind die Kühlkanäle (11) im Bereich des Rahmens (2) angeordnet. Zusätzlich zum Unterdruckkanal (9) ist im Bereich des Rahmens (2) ein Druckmittelkanal (16) angeordnet, der in einen Druckmittelanschluß (17) des Einsatzes (3) einmündet. Vorzugsweise erfolgt die Druckmitteleinleitung mit einem geringen Abstand zur Dichtung (13). Hierdurch wird durch die Kavität (14) hindurch eine Luftströmung in Richtung auf den Unterdruckkanal (9) erzeugt, die ein Einführen der Vorformlinge (1) in die Kavität (14) erleichtert und Kratzer am Vorformling (1) durch einen Kontakt mit der Begrenzungsfläche (15) vermeidet. Darüber hinaus wird ein ungleichmäßiger Kontakt des Vorformlings (1) mit dem Einsatz (3) vermieden, der zu ungleichmäßigen Abkühlungen des Vorformlings (1) führen würde.

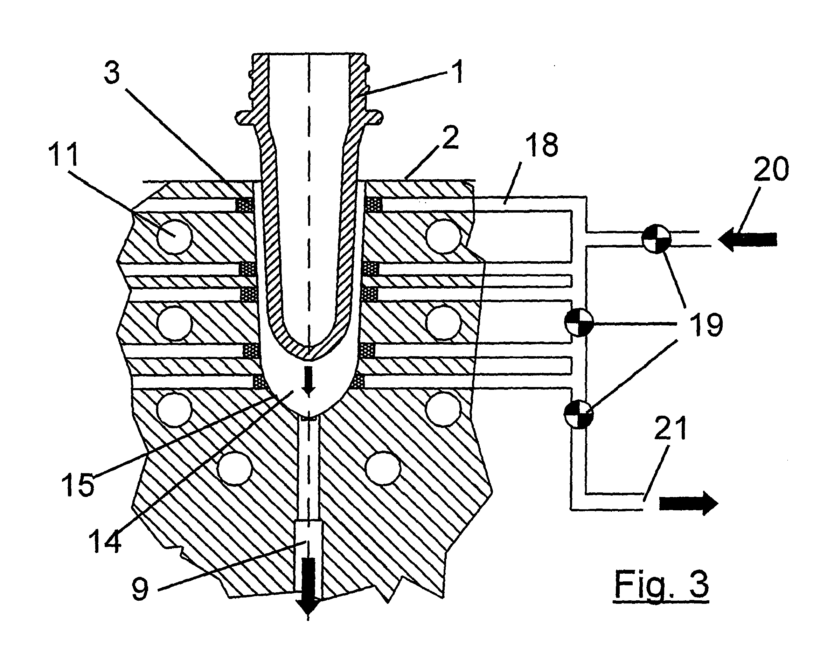

Bei der Ausführungsform gemäß Fig. 3 ist die Kavität (14) im Bereich des Rahmens (2) ausgebildet und im Bereich der Begrenzungsfläche (15) der Kavität (14) sind eine Mehrzahl von porösen Einsätzen (3) angeordnet. Die porösen Einsätze (3) sind hier räumlich voneinander getrennt. Darüber hinaus sind die Einsätze (3) jeweils mit Versorgungskanälen (18) verbunden, die über Steuerventile (19) vorgebbar an eine Druckquelle (20) oder an eine Unterdruckquelle (21) anschließbar sind. Auch bei dieser Ausführungsform erstreckt sich der Unterdruckkanal (9) bis in den Bereich der Kavität (14). Um das Einführen des Vorformlings (1) in die Kavität (14) zu erleichtern, wird zuerst nur Unterdruckkanal (9) mit einem Vakuum beaufschlagt. Sobald sich der Vorformling (1) komplett in der Kavität (14) befindet, gibt die Unterdruckquelle (21) ein höheren Unterdruck frei, um den Vorformling (1) an die Begrenzungsfläche (15) zu pressen.

Die räumlich voneinander getrennten Einsätze (3) stellen düsenartige Anordnungen bereit, die lokale Verformungen des Vorformlings (1) hervorrufen oder Druckluftkissen für den Vorformlinge (1) erzeugen können. Insbesondere ist auch daran gedacht, über die Einsätze (3) steuerbar heiße Druckluft zuzuführen, um den Vorformling (1) lokal zur Unterstützung einer vorgegebenen Verformung zu erwärmen.

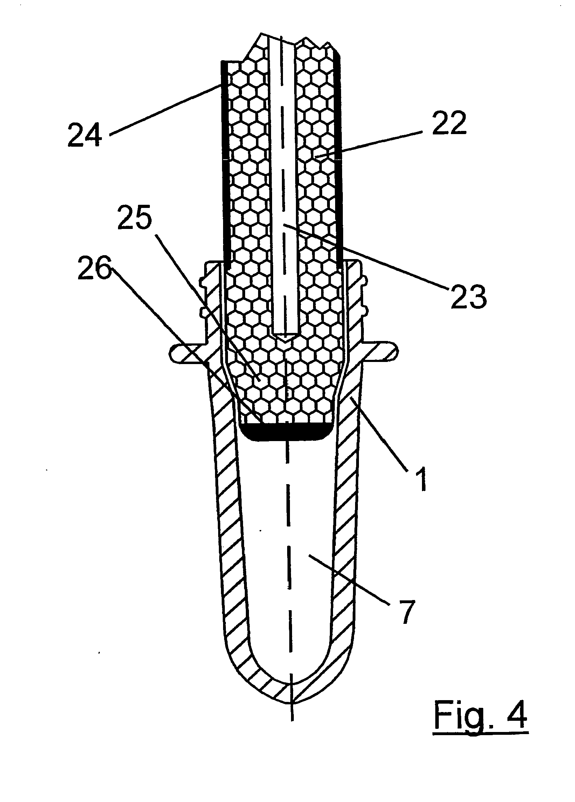

Bei der Ausführungsform gemäß Fig. 4 wird der Vorformling (1) von einem Innendorn (22) beaufschlagt, der aus einem porösen Material ausgebildet ist. Der Innendorn (22) ist mit einem Druckmittelkanal (23) versehen. Der Druckmittelkanal (23) kann in Abhängigkeit von einer jeweiligen Ansteuerung sowohl Überdruck als auch Unterdruck zuführen. Zur Vermeidung von Druckverlusten ist der Innendorn (22) außenseitig bereichsweise mit einer Dichtung (24) versehen. Bei der Ausführungsform gemäß Fig. 4 ist der Innendorn (22) nur für eine bereichsweise Nachverformung des Vorformlings (1) im Bereich des Mündungsabschnittes (6) sowie eines dem Mündungsabschnitt (6) zugewandten Teiles der Seitenwand (4) ausgebildet. Im Bereich einer Kuppe (25) trägt der Innendorn (22) deshalb hier ebenfalls eine Dichtung (26).

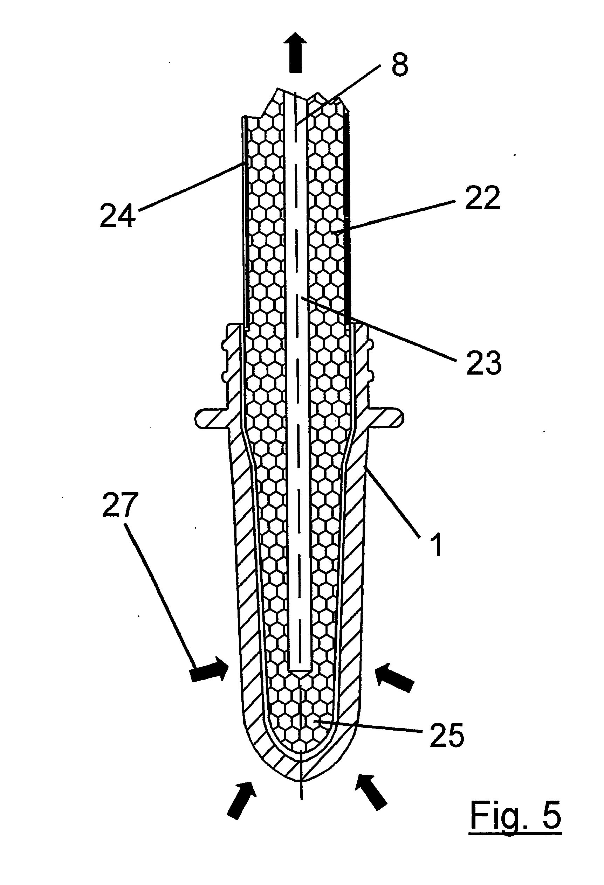

Bei der Ausführungsform gemäß Fig. 5 ist der Innendorn (22) zu einer Nachverformung des Vorformlings (1) entlang der gesamten Ausdehnung der Vorformlingslängsachse (8) ausgebildet. Der Innendorn (22) weist deshalb eine gegenüber der Ausführungsform in Fig. 4 abgewandelte Kontur auf. Eine Dichtung (26) im Bereich der Kuppe (25) ist bei dieser Ausführungsform nicht erforderlich. Zusätzlich zu einer Beaufschlagung des Vorformlings (1) mit Hilfe des Innendorns (22) kann gemäß der Ausführungsform in Fig. 5 eine von außen auf den vorformling (1) einwirkende Luftkühlung (27) realisiert werden.

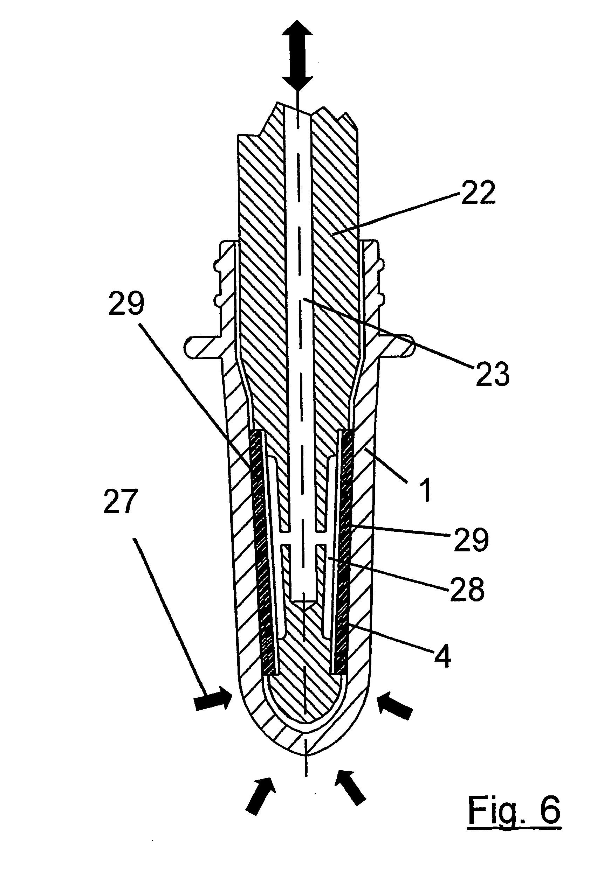

Bei der Ausführungsform gemäß Fig. 6 ist der Druckmittelkanal (23) an Verteilkammern (28) angeschlossen, die von Membranen (29) verschlossen sind. Bei einer Druckbeaufschlagung des Druckmittelkanals (23) werden die Membranen (29) gegen die Seitenwand (4) des Vorformlings (1) gepreßt und führen eine Verformung des Vorformlings (1) durch. Auch durch die von der Membran (29) erzeugte Kraft kann der Vorformling (1) entweder gegen die Innenwandung einer Kühlhülse gedrückt oder in vorgegebener weise verformt werden.

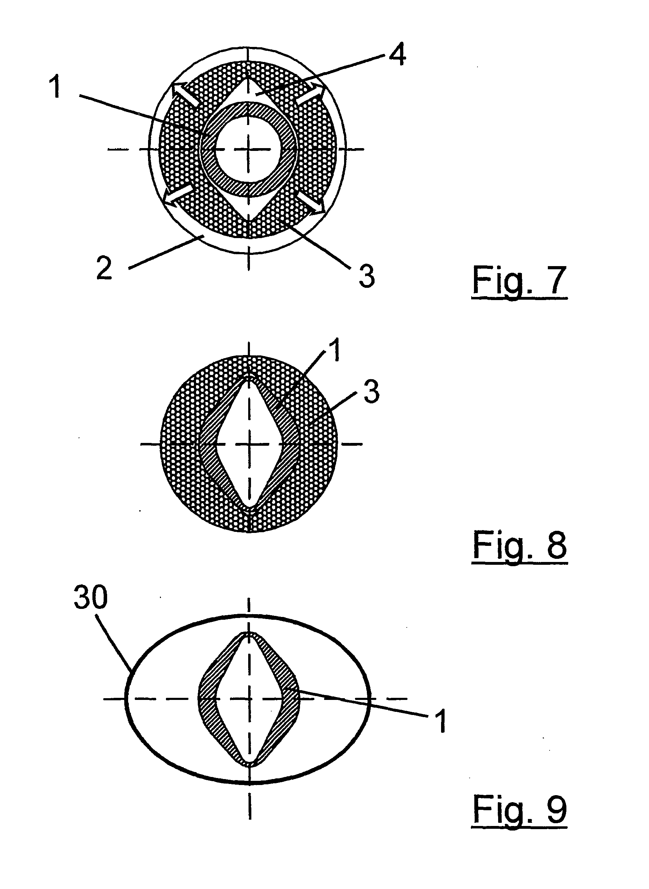

Fig. 7 zeigt einen Querschnitt durch einen Einsatz (3) mit einem in die Kavität (14) eingesetzten Vorformling (1). Der Einsatz (3) wird vom Rahmen (2) gehaltert.

Nach einer Unterdruckbeaufschlagung wird der Vorformling (1) gemäß Fig. 1 zu einem Vorformling entsprechend Fig. 8 verformt. Insbesondere ist aus Fig. 8 zu erkennen, daß durch die Verformung in einer Umfangsrichtung des Vorformlings ein unterschiedlicher Wanddickenverlauf erzeugt wurde. Die Vorformlingsgestaltung gemäß Fig. 8 ist insbesondere für die Herstellung von ovalen Flaschen geeignet.

Fig. 9 zeigt die Zuordnung des Vorformlings (1) gemäß Fig. 8 zu einer Behälterkontur (30) eines Behälters mit ovalem Querschnitt. Die Materialverteilung im Vorformling (1) ist derart gewählt, daß diejenigen Bereiche, die bei der anschließenden Blasverformung nur relativ geringfügig gereckt werden, dünner ausgebildet sind als diejenigen Bereiche, die bei der Blasverformung stärker gereckt werden. Durch die entsprechende Materialverteilung werden bei einem geblasenen Behälter eine sehr gleichmäßige Wanddickenverteilung und damit gleichmäßige Materialeigenschaften unterstützt.

Bei einer kombinierten wahlweisen Beaufschlagung des Einsatzes (3) mit Unterdruck und Überdruck kann eine Materialreinigung in einfacher Weise derart durchgeführt werden, daß ohne eingesetzten vorformling (1) eine Druckmittelbeaufschlagung erfolgt, die zu einem Abblasen von Verunreinigungen führt. Eine Trennung des Vorformlings (1) vom Innendorn (22) kann ebenfalls durch eine Druckmittelbeaufschlagung des Innendorns (22) unterstützt werden. Bei einer kombinierten Verwendung des Innendornes (22) und eines Einsatzes (3) aus einem porösen Material kann eine Trennung des Vorformlings (1) vom Innendorn (22) auch durch eine externe Unterdruckbeaufschlagung unterstützt werden.

## Patentansprüche

1. Vorrichtung zur Bearbeitung eines Vorformlings (1) aus einem thermoplastischen Kunststoff, der zur Blasverformung in einen Behälter vorgesehen und in einem Spritzgusswerkzeug spritzgusstechnisch hergestellt ist, wobei die Vorrichtung umfasst:
einen Innendorn (22) mit einem Druckmittelkanal (23), der an eine Verteilkammer (28) angeschlossen ist, wobei die Verteilkammer (28) von einer Membran (29) verschlossen ist, so dass bei einer Druckbeaufschlagung des Druckmittelkanals (23) die Membran (29) gegen die Seitenwand (4) des Vorformlings (1) gepresst wird und eine Verformung des Vorformlings (1) bewirkt.

2. Vorrichtung nach Anspruch 1, wobei die Vorrichtung ferner eine Kühlhülse umfasst, in welcher der Vorformling (1) derart aufgenommen werden kann, dass durch die von der Membran (29) erzeugte Kraft der Vorformling (1) gegen die Innenwandung der Kühlhülse gedrückt wird.

3. Verfahren zur Bearbeitung eines Vorformlings (1) aus einem thermoplastischen Kunststoff, der zur Blasverformung in einen Behälter vorgesehen ist, wobei das Verfahren die folgenden Schritte umfasst:
das spritzgusstechnische Herstellen des Vorformlings (1) in einem Spritzgusswerkzeug;
das Entnehmen des Vorformlings (1) aus dem Spritzgusswerkzeug; und
das Verformen des Vorformlings (1);
**dadurch gekennzeichnet, dass** das Verformen umfasst:
das Einbringen eines Innendorns (22) in den Vorformling (1), wobei der Innendorn (22) einen Druckmittelkanal (23) aufweist, der an eine Verteilkammer (28) angeschlossen ist, wobei die Verteilkammer (28) von einer Membran (29) verschlossen ist; und
die Druckbeaufschlagung des Druckmittelkanals (23), so dass die Membran (29) gegen die Seitenwand (4) des Vorformlings (1) gepresst wird und eine Verformung des Vorformlings (1) bewirkt.

4. Verfahren nach Anspruch 3, wobei beim Schritt des Verformens der Vorformling (1) in einer Kühlhülse aufgenommen ist, so dass durch die von der Membran (29) erzeugte Kraft der Vorformling (1) gegen die Innenwandung der Kühlhülse gedrückt wird.
